# EUROPÄISCHE PATENTSCHRIFT

(11) **EP 3 124 784 B1**
(45) Veröffentlichungstag und Bekanntmachung des Hinweises auf die Patenterteilung: **31.07.2019**
(21) Anmeldenummer: 16181700.2
(22) Anmeldetag: 28.07.2016
(51) Int. Cl.: F03B 3/08, F01D 1/32

(54) **VORRICHTUNG ZUR ENERGIEUMWANDLUNG**
DEVICE FOR ENERGY CONVERSION
DISPOSITIF DE CONVERSION D'ENERGIE

(30) Priorität: 30.07.2015 DE 102015112569
(43) Veröffentlichungstag der Anmeldung: 01.02.2017
(73) Patentinhaber: Hilpert, Sabine, 96264 Altenkunstadt (DE)
(72) Erfinder: Hilpert, Sabine, 96264 Altenkunstadt (DE)
(74) Vertreter: Sperschneider, Alexandra

(56) Entgegenhaltungen:
- EP-A1- 2 410 127
- DE-T2- 3 887 678
- US-A1- 2010 307 833

## Beschreibung

Die Erfindung betrifft eine Vorrichtung zur Energieumwandlung in Form einer Wasserturbine.

Aus dem Stand der Technik sind Energieumwandlungsvorrichtungen, insbesondere Wasserturbinen, bekannt, welche die kinetische und/oder potentielle Energie eines sich in Bewegung befindenden Mediums in mechanische Rotationsenergie umwandelt und diese an eine Antriebseinheit oder auch an einen Generator abgibt. Hierzu werden bei bekannten Wasserturbinen unterschiedliche Turbinenschaufeln auf der Rotationsachse zur Ausbildung eines Schaufelrades angeordnet. Durch erhöhten Wasserdruck, beispielsweise aufgrund einer entsprechend großen Fallhöhe, oder auch durch zusätzlich vorgesehene Leiträder wird das Medium beschleunigt und kann diese innere Energie an die Turbinenschaufel abgeben, so dass diese in Rotation versetzt wird.

Derartige bekannte Wasserturbinen erweisen sich allerdings als nachteilig, da einerseits immer gewisse Fallhöhen nötig sind, um eine ausreichend hohe Energie des Mediums überhaupt bereitstellen zu können. Zum anderen erweisen sich insbesondere die Turbinenschaufeln als sehr wartungs- und verschleißintensiv.

Verschiedene Konzepte, die sich von der hierin beschriebenen technischen Lehre unterscheiden, da sie einen anderen Aufbau aufweisen, eine andere Funktionsweise haben und für andere Zwecke vorgesehen sind, sind bspw. in EP 24 10 127 A1, DE 27 39 055 A1, US 5,236,349 A, WO 2008/129515 A2 und WO 2015/046704 A1 beschrieben.

Daher liegt der vorliegenden Erfindung die Aufgabe zugrunde, eine Wasserturbine bereitzustellen, welche wartungsärmer ist und welche einen verbesserten Wirkungsgrad als bisher bekannte Vorrichtungen umsetzen kann.

Diese Aufgabe wird gemäß den Merkmalen des Patentanspruches 1 gelöst.

Ein wesentlicher Punkt der Erfindung liegt darin, dass die Wasserturbine wenigstens einen hohlförmigen Rotorkörper zur Ausbildung eines Mediumkanals mit wenigstens einer den hohlförmigen Rotorkörper begrenzenden Abschlussfläche, wenigstens einer an dem Rotorkörper angeordneten Welle zur Energieabführung, wenigstens einer Mediumzuführöffnung zum Zuführen eines Fluids in den Rotorkörper hinein, sowie wenigstens einen Düsenring mit wenigstens einer Mediumaustrittsöffnung zum Abführen des Fluids aus dem Düsenring aufweist, wobei der Düsenring weiterhin wenigstens ein Scheibenelement aufweist und/oder als Scheibenelement ausgebildet ist. Dabei ist der Rotorkörper als Hohlzylinder ausgebildet und der Außendurchmesser des Düsenrings ist gleich groß wie der Außendurchmesser des Rotorkörpers.

Dies ist vorteilhaft, da die hier beschriebene Vorrichtung gänzlich schaufelradfrei ausgebildet ist und das Prinzip des Rückstoßes einsetzt. Somit ergibt sich eine verschleißärmere und auch effektivere Vorrichtung zur Energiegewinnung.

Der hohlförmige Rotorkörper ist im einfachsten Fall als Hohlzylinder ausgebildet, durch welchen das Fluid in Flussrichtung hindurchströmt. Weiterhin weist der Rotorkörper wenigstens eine Abschlussfläche auf, welche beispielsweise als Grundfläche ausgebildet ist und den Rotorkörper zumindest teilweise einseitig und/oder beidseitig begrenzt und abschließt. Vorteilhaft ist die erste Abschlussfläche diejenige Abschlussfläche, durch welche das Fluid in den Rotorkörper hinein eingeführt wird.

Zur Erleichterung der Einführung des Fluids in den Rotorkörper und folglich auch in dessen Hohlvolumen weist die Vorrichtung, vorteilhafter die erste Abschlussfläche, weiterhin wenigstens eine Mediumzuführöffnung auf, durch welche das Fluid in den Rotorkörper eingeführt werden kann. Diese Mediumzuführöffnung ist im einfachsten Fall in der ersten Abschlussfläche als durchgängige Öffnung ausgebildet.

Darüber hinaus ist auch denkbar, als bautechnische Vereinfachung, die Mediumzuführöffnung direkt mit einer Mediumzuführleitung zu verbinden bzw. diese einteilig mit dieser auszubilden. Vorteilhaft hat sich hierbei erwiesen, die Mediumzuführleitung als Welle zur Energieabführung, noch vorteilhafter als Hohlwelle, auszubilden, so dass auf eine separate Mediumzuführleitung verzichtet werden kann. Die als Hohlwelle ausgebildete Mediumzuführleitung ist vorteilhaft im Wesentlichen zentral an und durch die erste Abschlussfläche hindurch angeordnet. Diese mittige Positionierung ist einerseits von Vorteil, da somit Unwuchten bei Rotation der Vorrichtung vermieden werden. Zudem ist die mittige Positionierung von Vorteil, da hierdurch das Fluid am Mittelpunkt der ersten Abschlussfläche in den Rotorkörper hinein eingeführt wird, so dass sich das Fluid innerhalb des hohlförmigen Rotorkörpers gleichmäßig verteilen kann. Insbesondere im Rotationszustand der Vorrichtung ist dies vorteilhaft, da hierdurch eine gleichmäßige Mediumversorgung der Vorrichtung sichergestellt wird und Kavitation vermieden wird.

Als Fluid ist jegliche Flüssigkeit denkbar. Im einfachsten Fall liegt das Fluid als flüssiges Wasser vor. Dies ist selbstverständlich nicht begrenzend zu verstehen.

Besonders vorteilhaft hat es sich erwiesen, das Fluid druckbeaufschlagt über die Hohlwelle in den Rotorkörper einzuführen und den Rotorkörper zunächst durch externe Kraftbeaufschlagung in Rotation zu versetzen, so dass die Trägheit des Fluids der Rotationsbeschleunigung folgt. Die Fluidoberfläche im Rotorkörper wird ausgelenkt, so dass sich aufgrund der Kraftbeaufschlagung, vorteilhaft der Zentripetalkraft, eine Krümmung der Oberfläche ergibt und das Fluid entlang der Innenwandung des Rotorkörpers geführt wird und sich entlang dieser erstreckt. Mit dem Übergang des Fluids in Flussrichtung aus dem Rotorkörper heraus in den Düsenring und/oder der zweiten Abschlussfläche wird der Strömungsquerschnitt des Fluids deutlich verkleinert, da das erste Scheibenelement bzw. der als ein Scheibenelement ausgebildete Düsenring und/oder die zweite Abschlussfläche eine Vielzahl an Öffnungen aufweisen, deren gesamte Durchlassfläche in Summe kleiner ausgebildet ist, als die Querschnittsfläche des Rotorkörpers. Folglich erfährt das Fluid zumindest teilweise eine Abbremsung und zugleich auch teilweise eine Beschleunigung, nämlich dann, wenn das Fluid über die Öffnungen in den Düsenring überführt wird. Aufgrund der Rotation des Rotorkörpers im Betriebszustand sowie des daran angeordneten und/oder darin integrierten Düsenrings wird das Fluid aus der wenigstens einen Mediumaustrittskanalöffnung des Düsenrings in dessen Mantelfläche heraus beschleunigt und gibt unter Rückstoß hierbei Energie ab. Dies unterstützt zugleich die Rotation des Rotorkörpers.

Es hat sind insbesondere nach eine vorbestimmbaren Anlaufphase der Vorrichtung gezeigt, dass die Druckbeaufschlagung des in den Rotorkörper eingeführten Fluids reduziert werden kann, da sich durch die Rotation des Düsenrings mit dem Rotorkörper unter gleichzeitigem Austritt des Fluids unter Ausnutzung des Rückstoßes zumindest teilweise ein Unterdruck aufbaut, welcher das Fluid in den Rotorkörper und weiter in den Düsenring einsaugt. Selbstverständlich gilt es hierbei immer die Reibungsverluste zu berücksichtigen. Durch diese vorteilhafte Ausbildung der hier beschriebenen Vorrichtung nebst den unterschiedlichen Ausführungsbeispielen kann die Vorrichtung auch horizontal oder in jeder beliebigen Schräglage angeordnet werden. Auf den Druck der Wassersäule, wie er bei bekannten Schaufelradturbinen stets benötigt wird, wird hier verzichtet. Vorteilhaft wird die durch den Rückstoß bedingte Rotationskraft wieder mit zum Antrieb der Vorrichtung verwendet. Die hier beschriebene Vorrichtung ist folglich wassersäulendruckunabhängig ausgebildet.

Als besonders vorteilhaft hat sich erwiesen, die hier beschriebene Vorrichtung schaufelradfrei auszubilden. Hierzu weist die Vorrichtung neben den bis bisher beschriebenen Bestandteilen weiterhin wenigstens einen Düsenring mit wenigstens einer Mediumaustrittsöffnung zum Abführen des Fluids aus dem Düsenring auf, wobei der Düsenring weiterhin wenigstens ein Scheibenelement aufweist und/oder als ein Scheibenelement ausgebildet ist.

Der Düsenring ist in seinem Außenumfang wenigstens gleich groß zu dem Außendurchmesser des Rotorkörpers ausgebildet und verschließt den Rotorkörper an der zu der ersten Abschlussfläche gegenüberliegenden Seitenfläche. Folglich ist der Düsenring selbst als weitere, zweite Abschlussfläche des Rotorkörpers ausgebildet, so dass dessen innenliegendes Hohlvolumen, durch welches das Fluid strömt, von der ersten Abschlussfläche in Einströmrichtung und vom Düsenring als weitere Abschlussfläche in Ausströmrichtung begrenzt wird. Vorteilhaft sind hierbei entsprechende flüssigkeits- und/oder gasdichte Dichtelemente vorgesehen, so dass das Fluid verlässlich gegen unerwünschten Austritt geschützt ist.

In einer anderen Ausführungsform ist denkbar, dass der Rotorkörper durch eine weitere, separate Abschlussfläche an seinem noch offenen Ende verschlossen wird. Diese zweite Abschlussfläche entspricht in ihrer Geometrie der ersten Abschlussfläche, wobei die zweite Abschlussfläche eine Vielzahl an Durchgangsöffnungen aufweist, durch welche das Fluid aus dem Rotorkörper abgeführt wird. Die zweite Abschlussfläche in Ausströmrichtung ist vorteilhaft perforiert ausgebildet. Auf dieser zweiten Abschlussfläche ist in Flussrichtung ein Düsenring anordenbar. Die zweite Abschlussfläche ist einfach ausgebildet und weist wenigstens die Durchgangsöffnungen auf.

Vorteilhaft ist der Düsenring bei dieser Ausführungsform wenigstens durch ein Scheibenelement ausgebildet, welches mit der zweiten Abschlussfläche zumindest teilweise eine gemeinsame Kontaktfläche ausbildet und in Ausströmrichtung auf der zweiten Abschlussfläche und/oder an der zweiten Abschlussfläche fest angeordnet ist, beispielsweise verschweißt. Das Scheibenelement ist derart ausgebildet, dass es eine Vielzahl an Mediumkanälen aufweist, durch welche das durch die zweite perforierte Abschlussfläche hindurchströmende Fluid aufgenommen und aus dem Düsenring abgeführt werden kann. Vorteilhaft sind im fixierten Betriebszustand, wenn also das Scheibenelement, in diesem Fall folglich der Düsenring, an der zweiten Abschlussfläche angeordnet ist, die Durchgangsöffnungen der zweiten Abschlussfläche deckungleich mit den Mediumkanälen des Düsenrings ausgebildet, so dass das Fluid durchgängige Strömungswege hat und die Reibung reduziert wird.

Es haben sich mehrere Ausbildungen des Düsenrings als vorteilhaft erwiesen. Es ist vorteilhaft den Düsenring einteilig als Scheibenelement auszubilden, welches fest und/oder entnehmbar vom Rotorkörper und/oder der zweiten Abschlussfläche ausgebildet ist. Es ist auch denkbar, den Düsenring mehrteilig mit wenigstens zwei Scheibenelementen vorzusehen.

Allen Ausführungsformen ist gemeinsam, dass das Fluid aus dem Rotorkörper über unterschiedliche Öffnungen und Mediumkanäle durch den Düsenring hindurch, aus diesem abgeleitet werden, wobei hierbei eine Rückstoßkraft erzeugt wird, welche eine Rotation des Rotorkörpers bedingt und/oder unterstützt.

Weitere vorteilhafte Ausführungsformen ergeben sich aus den Unteransprüchen.

Die Länge des Rotorkörpers kann in weiteren Ausführungen größer sein als der Durchmesser des Rotorkörpers, wobei sich die Rotationsachse des Rotorkörpers in Längsrichtung des Rotorkörpers erstreckt.

Die mindestens eine Mediumaustrittskanalöffnung kann insbesondere tangential zur Mantelinnenfläche angeordnet bzw. ausgerichtet sein.

In einer weiteren vorteilhaften Ausführungsform weist der Düsenring wenigstens zwei Scheibenelemente auf, welche form- und/oder kraftschlüssig aneinander angeordnet sind und/oder welche miteinander in Wirkverbindung stehen. Vorteilhaft sind die beiden Scheibenelemente aneinander angeordnet und weisen vorteilhaft wenigstens eine gemeinsame Kontaktfläche auf.

Die Scheibenelemente sind senkrecht zur Flussrichtung des Fluids ausgerichtet, so dass das erste Scheibenelement als Abschlussfläche des Rotorkörpers ausgebildet ist und sich an dieses erste Scheibenelement in Flussrichtung des Fluids das zweite Scheibenelement anschließt, welches dann die Deckfläche der Vorrichtung ausbildet.

Um nun einen Mediumfluss des Fluids zu ermöglich, weist das erste Scheibenelement bei dieser Ausführungsform vorteilhaft wenigstens eine, vorteilhaft eine Vielzahl an Mediumeintrittskanalöffnungen auf, durch welche das aus dem Rotorkörper herausströmende Fluid hindurch in das erste Scheibenelemente hinein strömen kann. Das Fluid tritt somit über diese Mediumeintrittskanalöffnungen des ersten Scheibenelements in dieses ein. Zum Abführen bzw. Weiterführen des Fluids ist wenigstens eine, vorteilhaft mehrere, Mediumaustrittskanalöffnungen vorgesehen. Diese sind vorteilhaft an der Außenwandung des Düsenrings und/oder entlang der Außenwandung des Düsenrings, vorteilhafter in der Mantelfläche des Düsenrings, vorgesehen, welcher durch die beiden aneinander angeordneten Scheibenelemente ausgebildet ist. Selbstverständlich ist dies nicht begrenzend zu verstehen, so dass auch das erste Scheibenelement des Düsenrings die zweite Abschlussfläche des Rotorkörpers ausbilden kann. Ist das Scheibenelement als zweite Abschlussfläche ausgebildet und ersetzt diese, so weist das Scheibenelement eine Vielzahl an Mediumkanälen auf, durch welche das Fluid durch das Scheibenelement hindurchführbar ist.

Das erste Scheibenelement und/oder die zweite Abschlussfläche des Rotorkörpers weisen vorteilhaft zunächst eine Vielzahl an Öffnungen in Flussrichtung des Fluids auf, durch welche das Fluid von dem Rotorkörper in den Düsenring überführt wird. Im Weiteren schließen sich an diese Mediumeintrittskanalöffnungen Mediumkanäle an, welche vorteilhaft als (Teil)-Kavitäten ausgebildet sind.

Ist der Düsenring durch zwei Scheibenelemente ausgebildet, so ist deren Fixierung aneinander, beispielsweise mittels LaserSchweißen, nötig, da gerade im Austrittsbereich des Fluids eine hohe Kraftbeaufschlagung auf den Düsenring und insbesondere auf die beiden Scheibenelemente wirkt. Somit wird vorteilhaft sichergestellt, dass der Düsenring hohe Laufzeiten erfüllt und selbst wartungsarm ist. Dies ist nicht begrenzend zu verstehen.

Es ist auch denkbar, den Düsenring einteilig als Scheibenelement auszubilden. Auch ist es vorteilhaft den Düsenring aus zwei fest aneinander angeordneten Scheibenelementen auszubilden, wobei die beiden Scheibenelemente in ihrem Außendurchmesser gleich groß ausgebildet sind.

Bei einer weiteren vorteilhaften Ausführungsform weist wenigstens ein Scheibenelement Ausnehmungen zur Ausbildung von mit Fluid zu durchströmenden Kavitäten auf. Diese Ausnehmungen sind eine Weiterentwicklung des üblicherweise zylindrisch ausgebildeten Mediumkanals. Es hat sich gezeigt, dass durch die geometrische Veränderung des Mediumkanals in Form von (Teil)-Kavitäten, das Flussverhalten des Fluids deutlich verbessert werden kann, so dass eine höhere Energieausbeute beim Austritt des Fluids aus dem Düsenring die Folge ist.

Ist der Düsenring beispielsweise einteilig als ein Scheibenelement ausgebildet, welches direkt mit dem Rotorkörper verbunden ist, so sind innerhalb des Scheibenelements entsprechende Ausnehmungen vorgesehen, durch welche das Fluid hindurchströmen kann, um dann an der seitlichen Außenwandung des Scheibenelements, also im Bereich seiner Mantelfläche, wieder aus dem Scheibenelement unter Rückstoß auszutreten. Diese Ausnehmungen weisen besonders vorteilhafte geometrische Formen auf, um das Flussverhalten des Fluids zu verbessern.

Ist der Düsenring beispielsweise durch zwei Scheibenelemente ausgebildet, weisen beide Scheibenelemente einander ergänzende Teilkavitäten auf, durch welche das Fluid hindurchströmen kann. Im einfachsten Fall sind die Teilkavitäten des ersten Scheibenelements spiegelbildlich zu den Teilkavitäten des zweiten Scheibenelements ausgebildet, so dass sich eine abgeschlossene Kavität ausbildet, deren geometrische Form vorbestimmbar ist.

Ist das Fluid durch die einzelnen Kavitäten des Düsenrings hindurchgeströmt, so tritt es durch wenigstens eine Mediumaustrittskanalöffnung seitlich, vorteilhaft an der Mantelfläche des Düsenrings, aus dem Düsenring heraus. Vorteilhaft bilden die beiden Teilkavitäten im zusammengesetzten Zustand der beiden Scheibenelemente aneinander gemeinsam die jeweilige Kavität sowie die jeweilige Mediumaustrittskanalöffnung aus.

Sind zwei Scheibenelemente als Düsenring vorgesehen, so bilden diese eine vorteilhaft eine zylindrische Form aus, deren Außendurchmesser dem Außendurchmesser des Rotorkörpers entspricht.

Je nach Größe der hier beschriebenen Vorrichtung und gewünschter Leistung können die jeweiligen Ausnehmungen bzw. Teilkavitäten in dem entsprechenden Scheibenelement so vorgesehen werden, dass sich beim Zusammensetzen beider Scheibenelemente aneinander durchgängige Strömungskanäle und durchgängige Mediumaustrittskanalöffnungen für das Fluid ausbilden.

Das kraftbeaufschlagte Fluid strömt durch die (Teil-) Kavitäten hindurch in Richtung der Mediumaustrittskanalöffnungen des Düsenrings. Letztlich tritt das Fluid durch die Mediumaustrittskanalöffnungen heraus und induziert folglich einen Rückstoß, so dass der Austritt wiederum einen wesentlichen Beitrag zur Rotation des Rotorkörpers liefert.

Hierbei hat es sich als besonders vorteilhaft gezeigt, wenn die Teilkavitäten und/oder die Gesamtkavitäten derart ausgebildet sind, dass sie wenigstens einen trichterförmigen Wandungsabschnitt und wenigstens einen geraden, sich an den trichterförmigen Wandungsabschnitt anschließenden, Wandungsabschnitt aufweisen.

Diese besondere trichterförmige Ausgestaltung der (Teil-)Kavitäten hat sich dahin gehend als besonders vorteilhaft gezeigt, da hierdurch die Strömungsgeschwindigkeit des Fluids und folglich auch die Austrittsgeschwindigkeit des Fluids aus der Mediumaustrittskanalöffnung steuerbar ist.

Im einfachsten Fall sind die Mediumeintrittskanalöffnungen des ersten Scheibenelements und/oder die Durchgangsöffnungen der zweiten Abschlussfläche zylindrisch ausgebildet und weisen vorteilhaft zumindest teilweise konvex und/oder konkav gekrümmte Kanten auf. Dies ist von Vorteil, da hierdurch die auftretende Reibungsenergie wenn das Fluid auf das Scheibenelement trifft deutlich reduziert werden kann.

Beim Scheibenelement schließt sich vorteilhaft an die jeweiligen Mediumeintrittskanalöffnungen wenigstens ein Krümmungsbereich an, vorteilhaft ein trichterförmiger Wandungsabschnitt, welcher in einem vorbestimmbaren Winkel, vorteilhaft im Bereich von 45° bis 120°, versetzt zu der Einströmrichtung des Fluids ausgebildet ist. Die Flussrichtung des Fluids wird folglich ein erstes Mal um einen vorbestimmbaren Winkel umgeleitet.

Um nun Reibungs- und Energieverluste zu minimieren hat es sich als vorteilhaft gezeigt, wenigstens einen Wandungsabschnitt trichterförmig in Richtung der Mediumaustrittskanalöffnung derart auszubilden, dass sich der Durchmesser des trichterförmigen Wandungsabschnitts der Kavität in Richtung der Mediumaustrittskanalöffnungen verkleinert und das Fluid hierdurch eine zusätzliche Beschleunigung erfährt und beim Austritt entsprechend Energie abgeben kann.

Um die Strömungseigenschaften zu verbessern und die Energieverluste zu minimieren ist es weiterhin vorteilhaft, wenn zwischen dem trichterförmigen Wandungsabschnitt und den Mediumaustrittskanalöffnungen in der Mantelfläche noch ein geradliniger Wandungsabschnitt, beispielsweise zylindrischer Wandungsabschnitt, vorgesehen ist. Dieser trägt zu einer zusätzlichen Beruhigung des Fluids bei und sorgt zudem für eine zusätzliche Beschleunigung.

Der trichterförmige Wandungsabschnitt kann zudem vorteilhaft konvex und/oder konkav gekrümmt ausgebildet sein, um die Strömungsgeschwindigkeit und das -verhalten zusätzlich zu optimieren. So ist denkbar, den trichterförmigen Wandungsabschnitt in gekrümmter Kelchform auszubilden.

Der Düsenring zum Abführen des Fluids aus dem Rotorkörper heraus kann eine Vielzahl an Düsenelementen aufweisen, welche derart ausgebildet sind, dass wenigstens eine Mediumaustrittskanalöffnung, durch welche das Fluid aus den Düsenelementen abführbar ist, senkrecht zu einer Flussrichtung des Fluids innerhalb des Rotorkörpers angeordnet ist.

Die oben gemachten ausführlichen Ausführungen zur Ausbildung des Düsenrings als ein Scheibenelement oder die Ausführungsform, dass der Düsenring wenigstens zwei Scheibenelemente aufweist, sind hier auch für diese Ausführungsform in identischer Weise zu übernehmen und werden hiermit vollumfänglich für diese weitere Form in jeglicher Kombination eingeschlossen.

Im einfachsten Fall sind die Mediumeintrittskanalöffnungen im ersten Scheibenelement bzw. im Düsenring und/oder die Durchgangsöffnungen der zweiten Abschlussfläche zylindrisch ausgebildet und weisen vorteilhaft konvex und/oder konkav gekrümmte Kanten auf. Dies ist von Vorteil, da hierdurch die auftretende Reibungsenergie, wenn das Fluid auf das Scheibenelement und/oder die zweite Abschlussfläche trifft deutlich reduziert werden kann.

Bei einer vorteilhaften Ausführungsform sind die Düsenelemente weiterhin derart ausgebildet, dass jedes wenigstens eine Mediumaustrittskanalöffnung zum Abführen des Fluids aus den Düsenelementen heraus aufweist, wobei die wenigstens eine Mediumaustrittskanalöffnung um 90° versetzt zu der Mediumeintrittskanalöffnung ausgebildet ist. Der Düsenring weist hierbei vorteilhaft nur ein erstes Scheibenelement auf, welches zugleich die Abschlussfläche des Rotorkörpers und den Düsenring selbst ausbildet. Das Scheibenelement weist, wie oben ebenfalls ausführlich beschrieben, Mediumeintrittskanalöffnungen auf, durch welche das Fluid aus dem Rotorkörper abführbar ist.

Auf der außenliegenden Oberfläche des Scheibenelements sind die jeweiligen Düsenelemente derart angeordnet, dass deren Mediumeintrittsöffnung deckungsgleich mit der Mediumaustrittsöffnung des Scheibenelements ausgebildet ist und sich hierdurch ein durchgängiger Mediumkanal bedingt. Die Düsenelemente sind vorteilhaft als Aufsätze ausgebildet. Die Anzahl der Düsenelemente richtet sich nach der Größe des Rotorkörpers und liegt vorteilhaft im Bereich von drei bis 100 Stück.

Jedes Düsenelement weist einen innenliegenden Strömungskanalmit jeweils einer Mediumeintrittskanalöffnung und jeweils wenigstens einer Mediumaustrittsöffnung auf, durch welche das Fluid durch das Düsenelement hindurch geführt wird. Hierbei hat sich Anordnung und die Ausrichtung der Düsenelemente als besonders wichtig für die Effizienz der Vorrichtung gezeigt.

Durch die Anordnung der Düsenelemente oberhalb des Scheibenelements mit einem mit diesem durchgängig ausgebildeten Strömungskanal strömt das Fluid aus dem Rotorkörper zunächst in im Wesentlichen unveränderter Flussrichtung durch das Scheibenelement heraus in die einzelnen Düsenelemente. Die erste und einzige Ablenkung, vorteilhaft im Bereich von 45 bis 120°, erfährt der Fluidfluss erst innerhalb des jeweiligen Düsenelements.

Dieser einzige Flussablenkungsschritt reduziert deutlich Reibungs- und weitere Energieverluste, so dass der Wirkungsgrad der Vorrichtung deutlich gesteigert ist, als es bei bekannten Vorrichtungen im Stand der Technik der Fall ist.

Bei einer weiteren vorteilhaften Ausführungsform sind die Düsenelemente an dem Rotorkörper wenigstens bündig zu dessen Außendurchmesser angeordnet. Die Düsenelemente stehen folglich nicht seitlich über den Rotorkörper hinaus, sondern schließen mit dessen Durchmesser wenigstens bündig ab. Diese komprimierte Anordnung führt zu einer höheren Energieausbeute, da der Rückstoß, welcher beim Austritt des Fluids durch die Mediumaustrittskanalöffnungen erzeugt wird, effektiver genutzt wird.

Besonders vorteilhaft ergibt sich, dass die hier beschriebenen Vorrichtungen liegend, stehend und/oder in jeder beliebigen Schräglage anordenbar sind. Dies ist ein deutlicher Flexibitätszuwachs, so dass auch an schwierig zugänglichen Orten Energie gewonnen werden kann, ohne dass es der entsprechenden Fallhöhe des Wasserdruckes bedarf.

Bei einer weiteren vorteilhaften Ausführungsform weisen die Düsenelemente weiterhin wenigstens ein Diffusorelement auf. Dieses Diffusorelement ist vorteilhaft als Aufsatz auf die Mediumaustrittskanalöffnungen ausgebildet und bedingt eine zumindest teilweise Zerstäubung des austretenden Fluids.

Weiterhin sind die hier beschriebenen Vorrichtungen nebst Ausführungsbeispielen als Wasserturbine zu verwenden, wobei die Vorrichtung liegend, stehend und/oder in jeder beliebigen Schräglage verwendbar ist. Besonders vorteilhaft ist die hier beschriebene Erfindung als schaufelradlose Wasserturbine ausgebildet.

Der Düsenring kann wenigstens ein Scheibenelement aufweisen und/oder als ein Scheibenelement ausgebildet sein, wobei wenigstens eine Mediumeintrittskanalöffnung zum Einführen eines Fluids in den Düsenring hinein und wenigstens eine Mediumaustrittskanalöffnung zum Abführen des Fluids aus dem Düsenring heraus vorgesehen ist, wobei die wenigstens eine Mediumeintrittskanalöffnung mit der wenigstens einen Mediumaustrittskanalöffnung über wenigstens einen zumindest teilweise trichterförmig ausgebildeten Mediumkanal verbunden ist und dieser Mediumkanal in Richtung der Mediumauslasskanalöffnungen sich verjüngend und/oder konvex und/oder konkav gekrümmt und/oder asymmetrisch ausgebildet ist. Auch dieser Düsenring umfasst die oben beschriebenen Merkmale zur geometrischen Ausbildung der Ausnehmungen, (Teil-)Kavitäten.

Vorteile und Zweckmäßigkeiten sind der nachfolgenden Beschreibung in Verbindung mit der Zeichnung zu entnehmen. Hierbei zeigen:
- Fig. 1: eine perspektivische Ansicht eines Rotorkörpers;
- Fig. 2: eine perspektivische Schnittdarstellung eines Rotorkörpers;
- Fig. 3: eine perspektivische Ansicht einer ersten Abschlussfläche;
- Fig. 4: eine Schnittdarstellung von Fig. 3;
- Fig. 5: eine perspektivische Ansicht der zweiten Abschlussfläche;
- Fig. 6: eine perspektivische Ansicht eines Düsenrings;
- Fig. 7.: Eine perspektivische Ansicht eines Düsenelementes;
- Fig. 8: eine Schnittdarstellung von Fig. 7;
- Fig. 9: eine Schnittdarstellung von Fig. 6;
- Fig. 10: eine schematische Draufsicht eines Düsenrings;
- Fig. 11: eine Vergrößerung eines Ausschnitts aus Fig. 10; und
- Fig. 12: eine weitere Ansicht eines weiteren Düsenrings.
- Fig. 13 - 16: weitere vorteilhafte Ausführungsformen des Düsenrings;

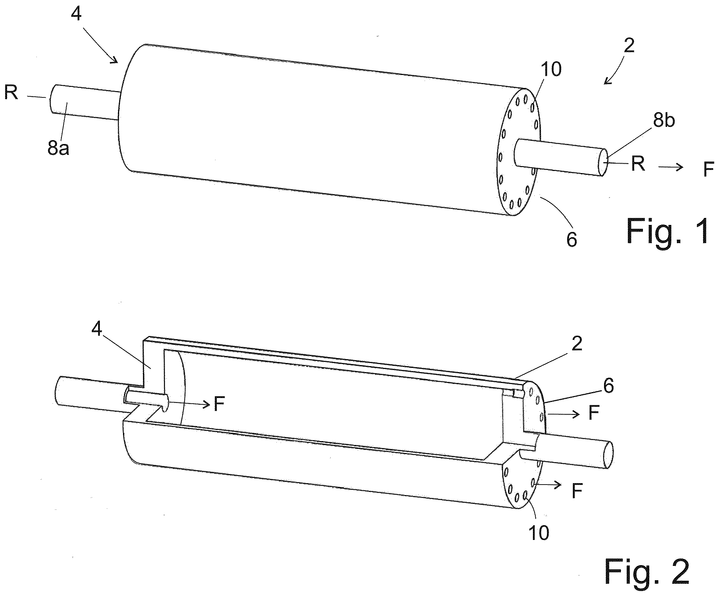

Fig. 1 zeigt einen Rotorkörper 2, welcher eine erste Abschlussfläche 4, eine hierzu gegenüberliegende zweite Abschlussfläche 6 sowie die Hohlwelle 8a aufweist. Der zweite Wellenabschnitt 8b ist als Vollwelle und/oder als verschlossene Hohlwelle ausgebildet, so dass kein Fluid hindurch strömen kann. Die zweite Abschlussfläche 6 ist als Scheibenelement ausgebildet und stellt einen Bestandteil des Düsenrings (nicht gezeigt) dar, und weist eine Vielzahl an Öffnungen 10 auf, durch welche das Fluid (nicht gezeigt) in Flussrichtung F hindurchströmen kann. In diesem Beispiel ist nun denkbar, den Düsenring in Form wenigstens eines Scheibenelements in Flussrichtung F nach der zweiten Abschlussfläche 6 fest auf dieser anzuordnen (nicht gezeigt).

Fig. 2 zeigt den gleichen Rotorkörper wie Fig. 1 in einer teilweisen Schnittdarstellung. Das Fluid tritt in Flussrichtung F in das Hohlvolumen des Rotorkörpers 2 ein und durchströmt diesen. Am gegenüberliegenden Ende ist der Rotorkörper 2 durch die zweite Abschlussfläche 6 verschlossen. Das Fluid kann lediglich über die Vielzahl an Öffnungen 10 aus dem Rotorkörper 2 austreten.

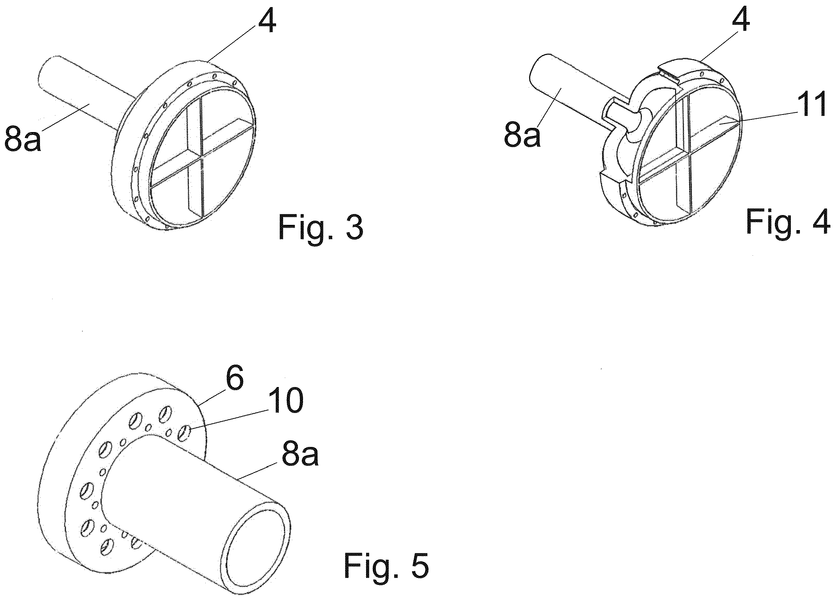

In Fig. 3 und 4 ist die erste Abschlussfläche 4 mit der Hohlwelle 8a gezeigt, durch welche das Fluid in den Rotorkörper 2 (nicht gezeigt) hineingeführt wird. Je nach gewünschtem Strömungsprofil des Fluids sind unterschiedliche Einsätze 11 denkbar.

Fig. 5 zeigt die zweite Abschlussfläche 6, mit der daran angeordneten Welle 8b. Das Fluid tritt nur über die Öffnungen 10 aus.

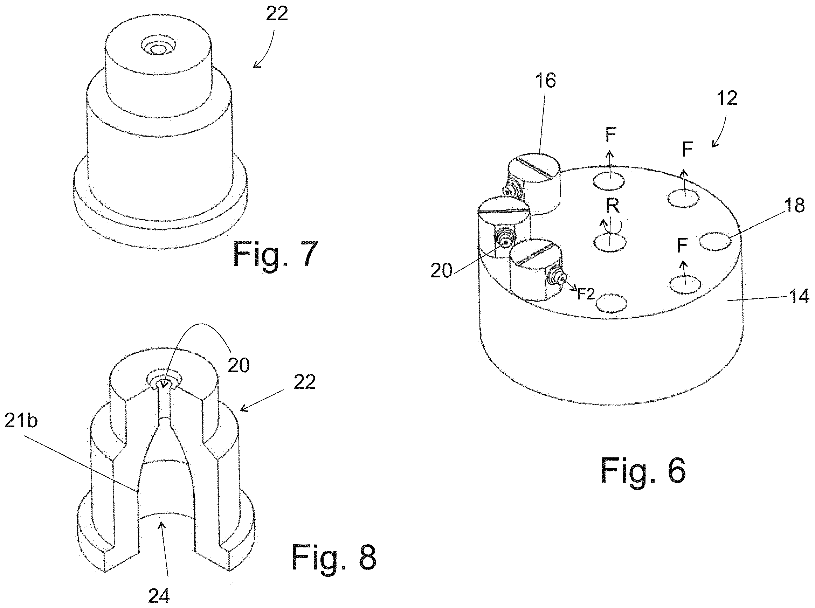

Fig. 6 zeigt einen ersten Düsenring 12, welcher ein Scheibenelement 14 und mehrere daran angeordnete Düsenelemente 16 aufweist. Das Scheibenelement 14 weist eine Vielzahl an Mediumeintrittskanalöffnungen 18 auf, durch welche das Fluid in die Düsenelemente 16 eingeführt wird. Die Düsenelemente 16 sind weiterhin vorteilhaft mehrteilig ausgebildet und weisen beispielsweise einen Düsenaufsatz 22, einen Düsengrundkörper 22a oder ein Diffusorelement (nicht gezeigt) auf.

Der Mediumfluss wird innerhalb der Düsenelemente 16 einmal umgeleitet, so dass das Fluid an den jeweiligen Mediumaustrittskanalöffnungen 20 vorteilhaft um 90° versetzt zur Flussrichtung F in Flussrichtung F2 austritt. In Fig. 7 und 8 sind die Düsenaufsätze 22 mit den Mediumaustrittskanalöffnung 20 gezeigt. Auch der Mediumkanal 21b des jeweiligen Düsenelements 22 ist kelchförmig gekrümmt ausgebildet und verjüngt sich in Richtung der Mediumaustrittskanalöffnung 20. Dies ist vorteilhaft für die Kraftbeaufschlagung des Fluids.

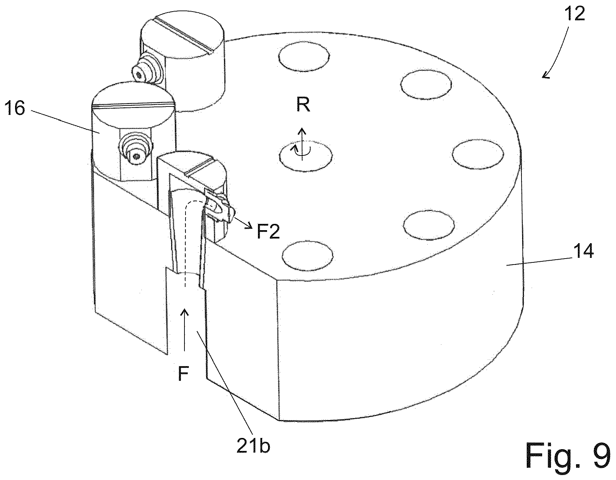

Fig. 9 zeigt eine Schnittdarstellung von Fig. 6, wobei der Fluidfluss im Mediumkanal 21b nebst Umlenkung von F nach F2 gezeigt ist. Durch das an den Mediumaustrittskanalöffnungen 20 austretende Fluid wird ein Rückstoß erzeugt, welcher den Rotorkörper 2 (nicht gezeigt) mit einer Rotationskraft beaufschlagt. Vorteilhaft sind hierbei die Düsenelemente 16 bündig mit der Oberfläche des Scheibenelements 14, also überstandsfrei, ausgebildet. Zudem ist die Ausrichtung der Düsenelemente derart ausgebildet, dass das daraus austretende Fluid an den benachbarten Düsenelementen vorbei angeführt wird. Dies ist vorteilhaft für die Ausnutzung des Rückstoßes.

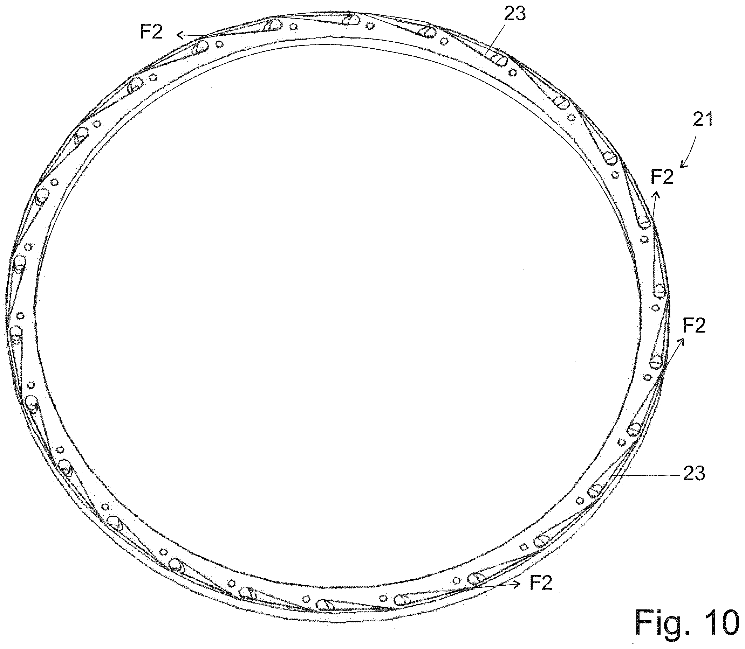

Fig. 10 zeigt einen weiteren Düsenring 21 mit Ausnehmungen 23 zur Ausbildung von Teilkavitäten. Die Ausnehmungen 23 entsprechen einem Mediumkanal, durch welchen das Fluid durch den Düsenring 21 hindurch führbar ist. In diesem Beispiel ist der Düsenring 21 aus zwei Scheibenelementen 14a, 14b ausgebildet, wobei nur ein erstes Scheibenelement 14a zur Veranschaulichung gezeigt ist.

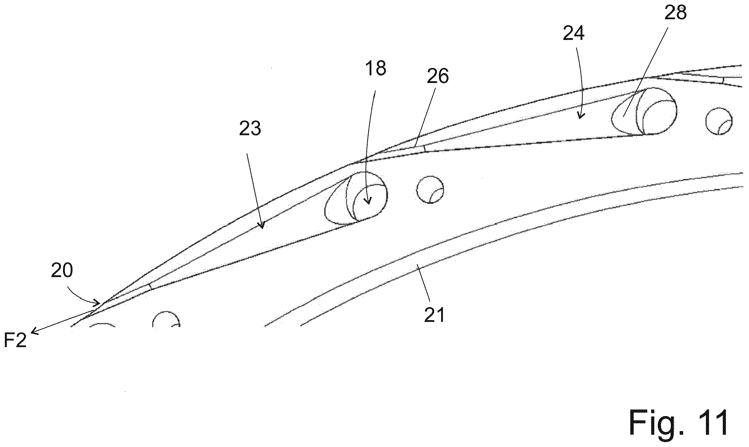

Fig. 11 zeigt eine entsprechende Vergrößerung. Das Fluid strömt durch die Mediumeintrittskanalöffnungen 18 ein und wird entlang bzw. durch im Scheibenelement 14 integrierte Ausnehmungen 23 geführt, um dann schließlich durch die Mediumaustrittskanalöffnungen 20, welche ebenfalls in dem Scheibenelement 14 integriert sind, auszutreten. Hierzu sind die Ausnehmungen 23 bzw. der Mediumkanal 21b derart ausgebildet, dass sie einen trichterförmigen Wandungsabschnitt 24 und einen geradlinigen Wandungsabschnitt 26 aufweisen. Der geradlinige Wandungsabschnitt 26 mündet in die Mediumaustrittskanalöffnung 20, durch welche das Fluid abgelenkt in Flussrichtung F2 unter Rückstoß austritt. Vorteilhaft weist der trichterförmige Wandungsabschnitt 24 zusätzliche Krümmungen auf, beispielsweise konvexe oder kelchartig ausgebildete Kanten 28, so dass das Strömungsverhalten des Fluids begünstigt wird. Diese Ausführungsform benötigt keine zusätzlichen Düsenaufsätze und ist folglich düsenaufsatzfrei ausgebildet. Zudem sind die Mediumaustrittskanalöffnungen 20 vorteilhaft von rund verschieden ausgebildet und weisen einen verzerrt ellipsoiden Querschnitt auf. Somit ist die Ausströmung des Fluids in Richtung F2 unverändert möglich und wird nicht durch eine runde Öffnung eingeschränkt.

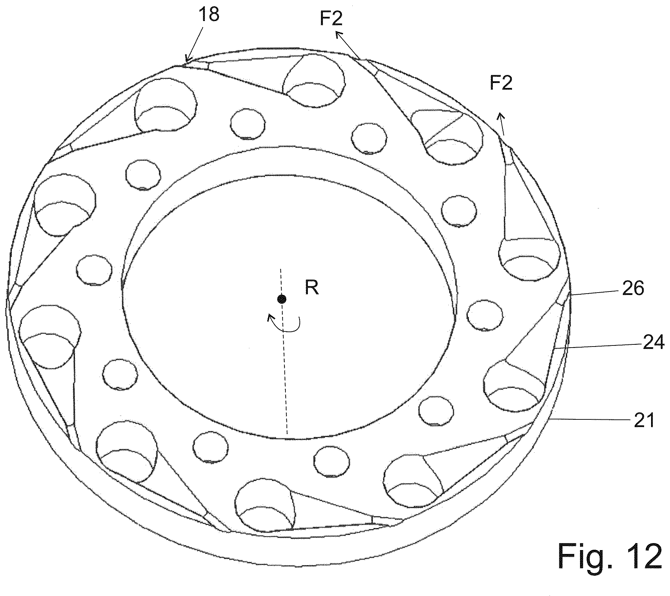

In Fig. 12 ist schließlich ein weiterer Düsenring 21 gezeigt, wobei gleiche Bezugszeichen wie zuvor auch gleichen Bauteilen entsprechen und nicht erneut erklärt werden. Die Anzahl der Ausnehmungen 23 erfolgt in Abhängigkeit des Durchmessers des Düsenrings 21. Zudem können die Längenverhältnisse in Bezug auf die Flussrichtung von trichterförmigen Wandungsabschnitten 24 und geradlinigen Wandungsabschnitten 26 variabel sein, wobei Verhältnisse von 6 : 1 bis 2 : 1 vorteilhaft sind.

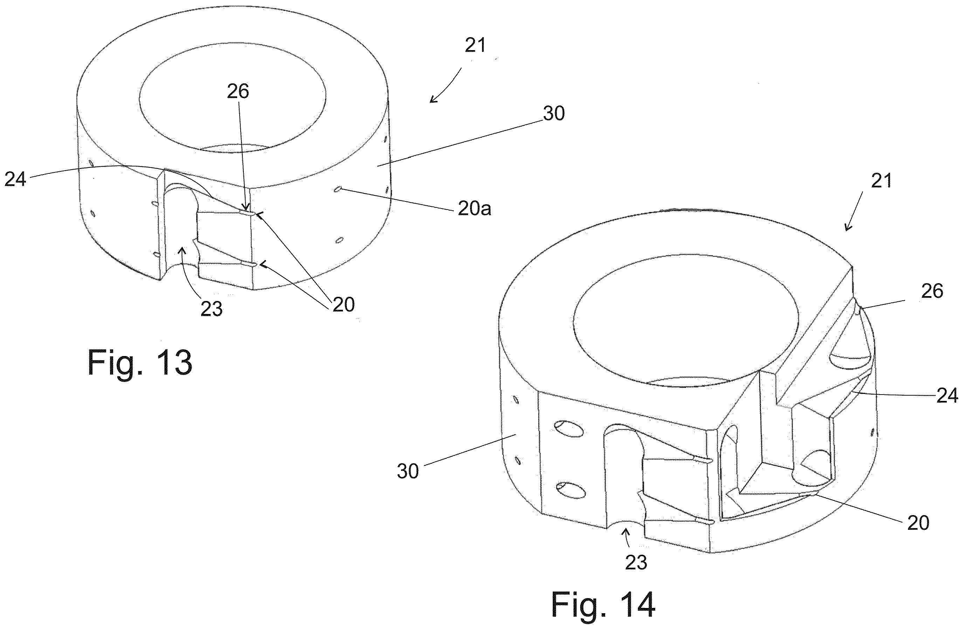

Fig. 13 und 14 zeigen eine weitere vorteilhafte Ausführungsform eines Düsenrings 21, bei welchem auch die oben bereits beschriebenen verzerrt ellipsoidalen Mediumaustrittskanalöffnungen 20a erkennbar sind. In diesem Ausführungsbeispiel ist der Düsenring 21 als einteiliges Scheibenelement 14 ausgebildet, welches innenliegende Kavitäten oder Ausnehmungen 23 aufweist. Hier sind die Ausnehmungen 23 oder auch Kavitäten als Doppelform ausgebildet, so dass es zwei Austrittsebenen des Fluids gibt. Die Mediumaustrittskanalöffnungen 20 nebst dem trichterförmigen und geradlinigen Wandungsabschnitten 24, 26 sind übereinander angeordnet und werden über eine gemeinsam Mediumeintrittskanalöffnung 18 mit Fluid bedient. Neben dieser im Wesentlichen parallelen Anordnung der Ausnehmungen 23 zueinander ist auch denkbar, diese versetzt auszubilden, so dass die Mediumaustrittskanalöffnungen 20; 20a beispielsweise eine Spiralform auf der Mantelfläche 30 beschreiben und immer versetzt zueinander angeordnet sind.

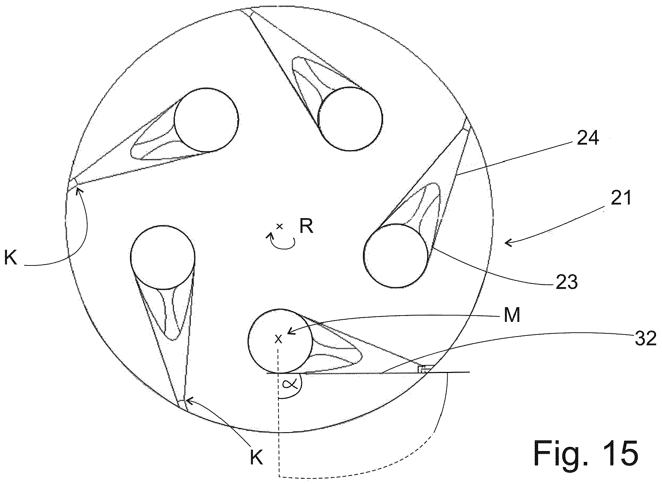

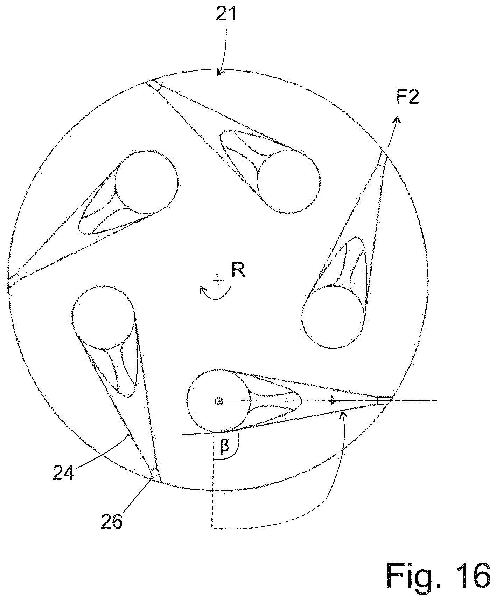

In Fig. 15 ist ein weitere Düsenring 21 gezeigt, dessen Ausnehmungen 23 asymmetrisch ausgebildet sind. Der Übergang von trichterförmigem Wandungsabschnitt 24 zu dem geradlinigen Wandungsabschnitt 26 erfolgt durch einen einseitigen Knick K. Der Knick K liegt vorteilhaft im Bereich von 100 bis 150°. Der trichterförmige Wandungsabschnitt 24 ist nicht symmetrisch ausgebildet und weist einen Abschnitt 32 auf, welcher derart ausgerichtet ist, dass er mit der Rotationsachse R des Rotorkörpers sowie der zentralen Mittelachse M der Mediumeintrittskanalöffnungen 18 einen Winkel α von 90° ausbildet. Hierdurch wird zugleich der Abstand zur Rotationsachse R erhöht, was einen vergrößerten Hebelarm bedingt. Im Vergleich zu der in Fig. 16 dargestellten symmetrischen Ausbildung der Ausnehmungen 23, weist die in Fig. 15 gezeigte Ausführungsform eine Leistungssteigerung von 10 bis 25% auf. In Fig. 16 weist der relevante Winkel β ohne den Knick K für den Hebelarm einen Wert von 100° auf und ist somit deutlich größer als der Winkel α. Bereits diese 10° Differenz bedingen eine unterschiedliche Leistungsabgabe.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 2: Rotorkörper
- 4: erste Abschlussfläche
- 6: zweite Abschlussfläche
- 8a: Hohlwelle
- 8b: Hohlwelle/Vollwelle
- 10: Öffnungen
- 12: Düsenring
- 14: Scheibenelement
- 16: Düsenelemente
- 18: Mediumeintrittskanalöffnung
- 20: Mediumaustrittskanalöffnung
- 20a: verzerrt ellipsoidale Mediumaustrittskanalöffnung
- 21: weiterer Düsenring
- 21b: Mediumkanal
- 23: Ausnehmungen
- 24: trichterförmige Wandungsabschnitte
- 26: geradlinige Wandungsabschnitte
- 28: Kante
- 30: Mantelfläche
- 32: Abschnitt
- R: Rotationsachse Rotorkörper
- F: Flussrichtung
- M: Mittelachse
- K: Knick
- F2: weitere Flussrichtung

## Patentansprüche

1. Wasserturbine, aufweisend
wenigstens einen hohlförmigen Rotorkörper (2) zur Ausbildung eines Mediumkanals mit wenigstens einer den hohlförmigen Rotorkörper begrenzenden Abschlussfläche (4), wobei der Rotorkörper (2) als Hohlzylinder ausgebildet ist,
wenigstens einer an und/oder in dem Rotorkörper (2) angeordneten Welle (8) zur Energieabführung,
wenigstens einer Mediumzuführöffnung zum Zuführen eines Fluids in den Rotorkörper hinein, sowie
wenigstens einen Düsenring (21) mit wenigstens einer Mediumaustrittskanalöffnung (20) zum Abführen des Fluids aus dem Düsenring (21), wobei der Düsenring (21) weiterhin wenigstens ein Scheibenelement (14) aufweist
und/oder als ein Scheibenelement (14) ausgebildet ist, und wobei der Außendurchmesser des Düsenrings (21) gleich groß wie der Außendurchmesser des Rotorkörpers (2) ist.

2. Wasserturbine nach Anspruch 1,
**dadurch gekennzeichnet, dass**
die Länge des Rotorkörpers (2) größer ist als der Durchmesser des Rotorkörpers (2), wobei sich die Rotationsachse (R) des Rotorkörpers (2) in Längsrichtung des Rotorkörpers (2) erstreckt.

3. Wasserturbine nach Anspruch 1 oder 2,
**dadurch gekennzeichnet, dass**
die mindestens eine Mediumaustrittskanalöffnung (20) tangential zur Mantelinnenfläche angeordnet ist.

4. Wasserturbine nach einem der Ansprüche 1 bis 3,
**dadurch gekennzeichnet, dass**
der Düsenring (21) wenigstens zwei Scheibenelemente (14) aufweist, welche form- und/oder kraftschlüssig aneinander angeordnet sind und/oder miteinander in Wirkverbindung stehen, wobei die Scheibenelemente (14) gemeinsame Mediumkanäle für das Fluid ausbilden.

5. Wasserturbine nach einem der Ansprüche 1 bis 4,
**dadurch gekennzeichnet, dass**
wenigstens ein Scheibenelement (14) Ausnehmungen (23) zur Ausbildung von mit Fluid zu durchströmenden Teilkavitäten aufweist, wobei die Teilkavitäten Abschnitte von Strömungskanälen für das Fluid sind.

6. Wasserturbine nach Anspruch 5,
**dadurch gekennzeichnet, dass**
die Teilkavitäten einen trichterförmigen Wandungsabschnitt (26) und einen geraden Wandungsabschnitt (28) aufweisen.

7. Wasserturbine nach einem der Ansprüche 1 bis 6, wobei der Düsenring (12; 21) wenigstens eine Mediumeintrittskanalöffnung (18) zum Einführen eines Fluids in den Düsenring (12; 21) hinein und wenigstens eine Mediumaustrittskanalöffnung (20) zum Abführen des Fluids aus dem Düsenring (12; 21) heraus aufweist, wobei die wenigstens eine Mediumeintrittskanalöffnung (18) mit der wenigstens einen Mediumaustrittskanalöffnung (20) über wenigstens einen zumindest teilweise trichterförmig ausgebildeten Mediumkanal (21b) verbunden ist und dieser Mediumkanal (21b) in Richtung der Mediumaustrittskanalöffnungen (20) sich verjüngend und/oder konvex und/oder konkav gekrümmt ausgebildet ist.

8. Verwendung der Wasserturbine nach wenigstens einem der vorangegangenen Ansprüche als Wasserturbine, wobei die Vorrichtung liegend, stehend und/oder in jeder beliebigen Schräglage verwendbar ist.

## Claims

1. Water turbine, comprising
at least one hollow-shaped rotor body (2) for forming a medium duct with at least one closing surface (4) limiting the hollow-shaped rotor body, wherein the rotor body (2) is designed as a hollow cylinder,
at least one shaft (8) for energy removal arranged on and/or in the rotor body (2),
at least one medium supply opening for supplying of a fluid into the rotor body, and
at least one nozzle ring (21) with at least one medium outlet duct opening (20) for the drainage of the fluid from the nozzle ring (21), wherein the nozzle ring (21) further comprises at least one disc element (14) and/or is designed as a disc element (14), and wherein the outer diameter of the nozzle ring (21) is equal to the outer diameter of the rotor body (2).

2. Water turbine according to claim 1,
**characterized in that**
the length of the rotor body (2) is greater than the diameter of the rotor body (2), wherein the rotation axis (R) of the rotor body (2) extends in the longitudinal direction of the rotor body (2).

3. Water turbine according to claim 1 or 2,
**characterized in that**
the at least on medium outlet duct opening (20) is arranged tangentially to the inner shell surface.

4. Water turbine according to one of the claims 1 to 3,
**characterized in that**
the nozzle ring (21) comprises at least two disc elements (14), which are arranged in a positive and/or non-positive manner on one another and/or are operatively connected to each other, wherein the disc elements (14) form common medium ducts for the fluid.

5. Water turbine according to one of the claims 1 to 4,
**characterized in that**
at least one disc element (14) comprises recesses (23) for forming partial cavities flowed through by fluid, wherein the partial cavities are sections of flow channels for the fluid.

6. Water turbine according to claim 5,
**characterized in that**
the partial cavities comprise a funnel-shaped wall section (26) and a straight wall section (28).

7. Water turbine according to one of the claims 1 to 6, wherein the nozzle ring (12; 21) comprises at least one medium inlet duct opening (18) for inserting a fluid into the nozzle ring (12; 21) and at least one medium outlet duct opening (20) for the discharge of a fluid from the nozzle ring (12; 21), wherein the at least one medium inlet duct opening (18) is connected with the at least one medium outlet duct opening (20) by at least one medium duct (21b) formed at least partially funnel-shaped and this medium duct (21b) in the direction of the medium outlet duct opening (20) is designed to be tapering and/or convex and/or concave curved.

8. Use of the water turbine according to at least one of the preceding claims as a water turbine, wherein the device can be used lying, standing and/or in any inclined position.

## Revendications

1. Turbine hydraulique, présentant
au moins un corps de rotor (2) de forme creuse pour former un canal de milieu avec au moins une surface de fermeture (4) délimitant le corps de rotor de forme creuse, dans laquelle le corps de rotor (2) est formé en tant que cylindre creux,
au moins un arbre (8) agencé contre et/ou dans le corps de rotor (2) pour une évacuation d'énergie,
au moins une ouverture d'amenée de médium pour amener un fluide jusque dans le corps de rotor, ainsi que
au moins une couronne de buses (21) avec au moins une ouverture de canal de sortie de médium (20) pour évacuer le fluide hors de la couronne de buses (21), dans laquelle la couronne de buses (21) présente en outre au moins un élément de disque (14) et/ou est formée en tant qu'élément de disque (14), et dans laquelle le diamètre extérieur de la couronne de buses (21) est de la même taille que le diamètre extérieur du corps de rotor (2).

2. Turbine hydraulique selon la revendication 1,
**caractérisée en ce que**
la longueur du corps de rotor (2) est plus grande que le diamètre du corps de rotor (2), dans laquelle l'axe de rotation (R) du corps de rotor (2) s'étend dans une direction longitudinale du corps de rotor (2).

3. Turbine hydraulique selon la revendication 1 ou 2,
**caractérisée en ce que**
la au moins une ouverture de canal de sortie de médium (20) est agencée de manière tangentielle par rapport à la surface intérieure de l'enveloppe.

4. Turbine hydraulique selon l'une des revendications 1 à 3,
**caractérisée en ce que**
la couronne de buses (21) présente au moins deux éléments de disque (14), lesquels sont agencés l'un par rapport à l'autre par complémentarité de forme et/ou de force et/ou sont en liaison fonctionnelle l'un avec l'autre, dans laquelle les éléments de disque (14) forment des canaux de milieu communs pour le fluide.

5. Turbine hydraulique selon l'une des revendications 1 à 4,
**caractérisée en ce que**
au moins un élément de disque (14) présente des évidements (23) pour former des cavités partielles destinées à être parcourues par un fluide, dans laquelle les cavités partielles sont des tronçons de canaux d'écoulement pour le fluide.

6. Turbine hydraulique selon la revendication 5,
**caractérisée en ce que**
les cavités partielles présentent un tronçon de paroi en forme d'entonnoir (26) et un tronçon de paroi droit (28).

7. Turbine hydraulique selon l'une des revendications 1 à 6, dans laquelle la couronne de buses (12 ; 21) présente au moins une ouverture de canal d'entrée de médium (18) pour introduire un fluide jusque dans la couronne de buses (12 ; 21) et au moins une ouverture de canal de sortie de médium (20) pour évacuer le fluide hors de la couronne de buses (12 ; 21), dans laquelle la au moins une ouverture de canal d'entrée de médium (18) est reliée à la au moins une ouverture de canal de sortie de médium (20) via au moins un canal de milieu (21b) au moins partiellement en forme d'entonnoir et ce canal de milieu (21b) est formé en se rétrécissant dans la direction des ouvertures de canal de sortie de médium (20) et/ou courbé de façon convexe et/ou concave.

8. Utilisation de la turbine hydraulique selon au moins l'une des revendications précédentes en tant que turbine hydraulique, dans laquelle le dispositif peut être utilisé debout, couché et/ou dans n'importe quelle position inclinée.
